# EUROPEAN PATENT APPLICATION

(11) **EP 2 434 609 A2**
(43) Date of publication of application: **28.03.2012**
(21) Application number: 11152454.2
(22) Date of filing: 28.01.2011
(51) Int. Cl.: H02J 7/00, H01M 4/00

(54) **Hybrid battery module and battery management method**

(30) Priority: 24.09.2010 TW 099132430
(71) Applicant: Lite-On Clean Energy Technology Corp., Taipei City (CN)
(72) Inventor: Chen, Jan-Gee, 231, Xindian City (TW); Cheng, Ming-Wang, 327, Xinwu Township (TW)
(74) Representative: Viering, Jentschura & Partner

(57) **Abstract**

A hybrid battery module and a battery management method are provided. The hybrid battery module comprises a first energy storage unit, a second energy storage unit, and a charging unit. The charging unit is coupled between the first energy storage unit and the second energy storage unit for selectively providing a charging path between the first energy storage unit and the second storage unit. The first energy storage unit and the second energy storage unit transmit the energy stored therein to each other through the charging unit to maintain optimum power statuses thereof.

## Description

### BACKGROUND OF THE INVENTION

### 1. Field of the Invention

The present invention relates to a battery module; in particular, to a hybrid battery module and a battery management method which are suitable for electric vehicles.

### 2. Description of Related Art

As human awareness of environmental protection and increasing energy conservation, electric vehicles have obvious advantages of reducing urban air pollution and have benefits such as quiet, zero pollution emission and without the use of gasoline. Electric vehicles require a combination of electrical, mechanical, and battery technologies, wherein battery technology is the most important one. Even though the battery modules of the electric vehicles may provide the necessary electric power to accelerate the electric vehicles, the battery modules are restricted by the energy density, the power density, also called specific power, and the battery charge and discharge mechanism, etc. Therefore, how to increase the service life of the battery modules for the electric vehicles and reduce the overall volume of the battery modules have became the most important issues which are supposed to be solved during the development of electric vehicles.

Since lithium batteries have advantages such as higher discharging rate, shorter charging time, longer cycle time, and better conversion efficiency, it already becomes a vital technique of the next generation of electric vehicles. Secondary batteries, i.e., rechargeable batteries, are divided into power type secondary batteries and energy type secondary batteries based on instantaneous output power. The power type secondary batteries are lithium-iron series batteries or lithium-manganese series batteries, which have higher power densities and may generate large output power instantaneously, suitable for providing instantaneous large electric power required during the electric vehicles startup and acceleration. The energy type secondary batteries are lithium-cobalt series batteries with higher energy density which may provide the consistent electric power required for the electric vehicles operating under a steady state, thereby increasing the driving distance of the electric vehicles.

Since under operating process the internal resistances and power of the power type secondary batteries and the energy type secondary batteries are different, loads may not recharge these two types of batteries simultaneously. When the power of the power type secondary battery is insufficient, it may not provide large output power instantaneously; while the power of the energy type secondary battery is insufficient, it may not provide consistent power output for the electric vehicles. In order to increase the power and energy provided by the battery module, it's common to use battery modules consisting of a series connected or a parallel connected battery module. The series connected and the parallel connected battery modules use two sets of secondary batteries. In the series connected battery module, the first set of batteries (higher power) provides electricity to the load, and the other set of batteries is used to charge the first set of batteries, without supplying power to the load directly. In the parallel connected battery module, two sets of batteries are selectively switched to supply power to the load, but these two sets of batteries may not charge to each other or provide power to the load at the same time.

### SUMMARY OF THE INVENTION

The present invention provides a hybrid battery module and a method of controlling the same. The hybrid battery module may have two different types of energy storage elements, such as two different types of secondary batteries, so as to choose the most suitable power source to provide power in accordance with characteristics of the energy storage elements while the load is under different power requirements. For example, while an electric vehicle is climbing a slope or is accelerating, a power type battery module is used to provide output power; while the electric vehicle is under a normal driving mode, an energy type battery module is applied. The specific method is applied to prevent the damage to the battery and increase the service life of the battery module. Meanwhile, the two types of secondary batteries may charge to each other through a charging path, thereby achieving the effect of transmitting energy to each other. By utilizing the circuit which is designed to allow mutually energy transmission, the hybrid battery module may keep the two types of secondary batteries at the optimum status for providing electric power required by the load.

The present invention provides a hybrid battery module, which is suitable for supplying power to a load terminal. Therein, the hybrid battery module comprises a first energy storage unit, a second energy storage unit, a charging unit, and a power supply switching unit. The charging unit couples between the first energy storage unit and the second energy storage unit, for selectively providing a charging path between the first energy storage unit and the second energy storage unit, so that the first energy storage unit charges the second energy storage unit or the second energy storage unit charges the first energy storage unit. The power supply switching unit couples between the first energy storage unit, the second energy storage unit, and the load terminal, for selectively electrically connecting the load terminal to the first energy storage unit or the second energy storage unit so as to supply power to the load terminal.

In an embodiment according to the present invention, the charging unit comprises a current limit unit and a first switch. The current limit unit couples to the first energy storage unit, for limiting the current flowing through of the charging path. The first switch couples between the current limit unit and the second energy storage unit. Therein, the current limit unit is implemented by utilizing a resistor or a bidirectional DC-DC power converter. The power supply switching unit comprises a second switch and a third switch. The second switch couples between the first energy storage unit and the load terminal. The third switch couples between the second energy storage unit and the load terminal.

Wherein the current limit unit and the power supply switching unit are controlled by a battery management circuit. The battery management circuit controls the charging unit and the power supply switching unit based on the power statuses of the first energy storage unit and the second energy storage unit, for determining to conduct or cutoff a power supplying path and the charging path.

The present invention also provides a battery management method, which is suitable for managing a hybrid battery module to supply power to a load terminal. The battery management method comprises the following steps: providing a first energy storage unit and a second energy storage unit; selectively providing a charging path between the first energy storage unit and the second energy storage unit, so that the first energy storage unit charges the second energy storage unit or the second energy storage unit charges the first energy storage unit; and selectively electrically connecting the load terminal to the first energy storage unit or the second energy storage unit so as to supply power to the load terminal.

As per the aforementioned embodiments, the hybrid battery module and the battery management method according to the present invention are utilized by providing the conducted charging path between two batteries selectively, so that the two batteries may transfer energy and charge to each other. Furthermore, a current limit unit is applied to overcome the problem of failure transferring energy between the batteries when the internal resistances of the batteries are different.

In order to further the understanding regarding the present invention, the following embodiments are provided along with illustrations to facilitate the disclosure of the present invention.

### BRIEF DESCRIPTION OF THE DRAWINGS

FIG. 1 illustrates a schematic diagram of an embodiment of a hybrid battery module according to the present invention;

FIG. 2 illustrates a schematic diagram of the embodiment of the hybrid battery module which utilizes a power type secondary battery and a energy type secondary battery according to the present invention;

FIG. 3 illustrates a schematic diagram of another embodiment of a hybrid battery module according to the present invention;

FIG. 4 illustrates a schematic diagram of the embodiment of the hybrid battery module which applies a bidirectional DC-DC power converter to replace a current limit unit according to the present invention; and

FIG. 5 illustrates a flowchart of yet another embodiment of a battery management method according to the present invention.

### DETAILED DESCRIPTION OF THE PREFERRED EMBODIMENTS

The aforementioned illustrations and following detailed descriptions are exemplary for the purpose of further explaining the scope of the present invention. Other objectives and advantages related to the present invention will be illustrated in the subsequent descriptions and appended drawings.

(First Embodiment)

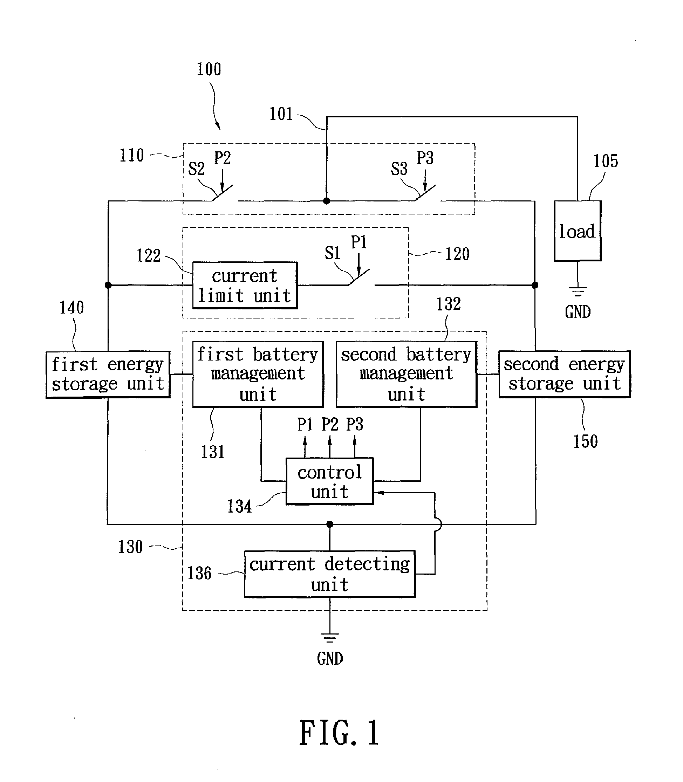

Please refer to FIG. 1, in which a schematic diagram of a hybrid battery module in accordance with certain aspects of the present invention is illustrated. A hybrid battery module 100 has a load terminal 101 which may connect to the load 105 for supplying power. The hybrid battery module 100 comprises a power supply switching unit 110, a charging unit 120, a battery management circuit 130, a first energy storage unit 140, and a second energy storage unit 150. The power supply switching unit 110 includes a switch S2 and a switch S3, wherein the switch S2 is coupled between the first energy storage unit 140 and the load terminal 101. The switch S3 is coupled between the load terminal 101 and the second energy storage unit 150. The charging unit 120 includes a current limit unit 122 and a switch S1, wherein the current limit unit 122 and the switch S1 are coupled in series between the first energy storage unit 140 and the second energy storage unit 150. The battery management circuit 130 includes a first battery management unit 131, a second battery management unit 132, a control unit 134, and a current detecting unit 136. The control unit 134 is coupled to the first battery management unit 131, the second battery management unit 132, and the current detecting unit 136. The first battery management unit 131 is further coupled to the first energy storage unit 140. The second battery management unit 132 is further coupled to the second energy storage unit 150. The current detecting unit 136 is coupled between the first energy storage unit 140, the second energy storage unit 150, and the ground terminal GND. Moreover, another terminal of the load 105 is coupled to the ground terminal GND.

The switch S2 and the switch S3 of the power supply switching unit 110 are in response to the outputted control signals P2, P3 from the battery management circuit 130. By controlling the switch S2 and the switch S3, the power supply switching unit 110 may electrically connect the load terminal 101 to the first energy storage unit 140 or the second energy storage unit 150 selectively, for supplying power to the load terminal 101. When the switch S2 is conducted, the first energy storage unit 140 may provide power to the load 105 through the load terminal 101; while the switch S3 is conducted, the second energy storage unit 150 may provide power to the load 105 through the load terminal 101.

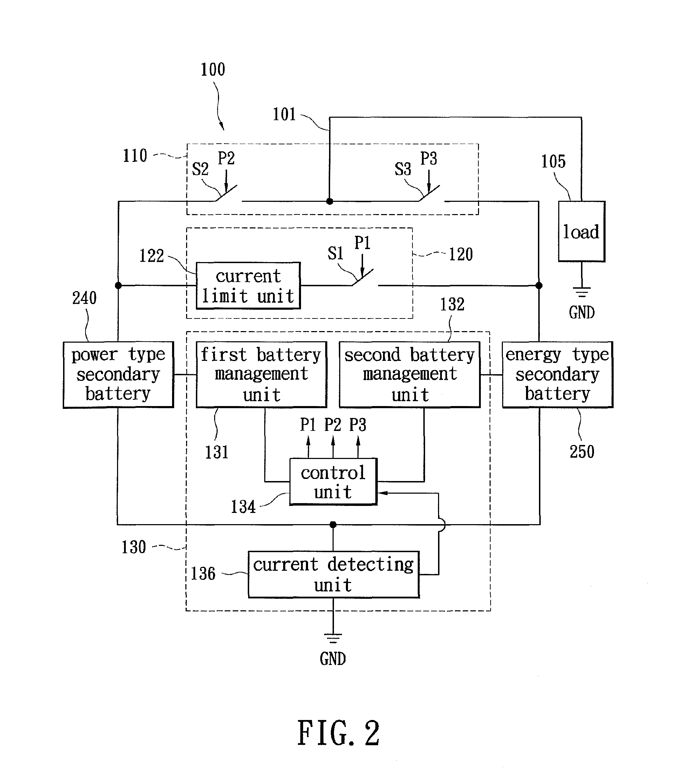

Please refer to FIG. 2 as well, in which a schematic diagram of the hybrid battery module in accordance with another embodiment of the present invention is illustrated. In the embodiment, the first energy storage unit 140 and the second energy storage unit 150 are secondary batteries. The first energy storage unit 140 may be power type secondary batteries, such as lithium-iron or lithium-manganese secondary batteries, and the second energy storage unit 150 may be energy type secondary batteries, such as lithium-cobalt secondary batteries, but are not limited thereto. The major difference between the FIG. 1 and FIG. 2 is that the power type secondary battery 240 and the energy type secondary type 250 shown in FIG. 2 are used to replace the first energy storage unit 140 and the second energy storage unit 150 shown in FIG. 1. The power supply switching unit 110 may switch a power supplying path based on the electric power required by the load 105. The power supply switching unit 110 may select the first energy storage unit 140 or the second energy storage unit 150 to provide power to the load 105. For example, when the load 105 requires large electric power instaritaneously, the power supply switching unit 110 may switch the power supplying path to the first energy storage unit 140; while the load 105 requires consistent power supply, the power supply switching unit 110 may switch the power supplying path to the second energy storage unit 150. In other words, the hybrid battery module 100 may select the most suitable type of energy storage unit to provide power to the load 105 in accordance with the power requirements of the load 105.

Please refer to FIG. 1, the charging unit 120 is coupled between the first energy storage unit 140 and the second energy storage unit 150, for selectively providing a charging path between the first energy storage unit 140 and the second energy storage unit 150, so that the first energy storage unit 140 charges the second energy storage unit 150 or the second energy storage unit 150 charges the first energy storage unit 140. The switch S1 of the charging unit 120 is in response to the outputted control signal P1 from the battery management circuit 130. When the switch S1 is conducted, the charging unit 120 generates a charging path between the first energy storage unit 140 and the second energy storage unit 150, so that the first energy storage unit 140 and the second energy storage unit 150 may charge to each other. For example, while the power of the first energy storage unit 140 is low, the second energy storage unit 150 charges the first energy storage unit 140 through the charging path; while the power of the second energy storage unit 150 is low, the first energy storage unit 140 charges the second energy storage unit 150 through the charging path.

While the first energy storage unit 140 and the second energy storage unit 150 are transferring energy to each other, the current limit unit 122 is used to limit the current flowing through the charging path, i.e., restricting the current passing through the current limit unit 122 and the switch S1. Since the internal resistances of the secondary batteries are varied according to the battery type, electric power value, temperature, and battery status, it also requires different current to perform charging. The embodiment utilizes the current limit unit 122 to adjust a suitable current so as to transfer energy between two battery packs. In the embodiment, the current limit unit 122 may be implemented by applying a resistive component, e.g., resistors or variable resistors. It is worth to mention that the resistance value applied by the current limit unit 122 may be determined based on the battery types and battery power statuses of the first energy storage unit 140 and the second energy storage unit 150. In order to achieve the effect of limiting current, it only requires the current limit unit 122 to setup a fixed resistance. In another embodiment of the present invention, the current limit unit 122 may be implemented by passive components, e.g., inductors or capacitors, or active components, e.g., bidirectional DC-DC power converters, but are not limited thereto.

The battery management circuit 130 may be implemented by the first battery management unit 131, the second battery management unit 132, the control unit 134, and the current detecting unit 136. The first battery management unit 131 and the second battery management unit 132 are used to monitor the power statuses, e.g., electrical power values, voltage levels, or internal resistances, etc., of the first energy storage unit 140 and the second energy storage unit 150, respectively, but are not limited thereto. The current detecting unit 136 is used to detect the current values of the first energy storage unit 140 and the second energy storage unit 150. The control unit 134 controls the charging unit 120 and the power supply switch unit 110 based on the power statues and current values of the first energy storage unit 140 and the second energy storage unit 150, for example, controlling the switches S1 ~ S3 to determine the ways of charging and discharging.

For example, when the power of the first energy storage unit 140 is low and the power of the second energy storage unit 150 is sufficient, the battery management circuit 130 may conduct the switch S 1 to allow the second energy storage unit 150 charge the first energy storage unit 140. On the other hand, while the power of the second energy storage unit 150 is low and the power of the first energy storage unit 140 is sufficient, the first energy storage unit 140 charges to the second energy storage unit 150. As the power of both the first energy storage unit 140 and the second energy storage unit 150 are sufficient, the battery management circuit 130 turns off (cuts off) the switch S1. Additionally, in the embodiment, the first energy storage unit 140 and the second energy storage unit 150 may be recharged by the regenerative electricity from the load 105. For example, as the switch S2 is conducted, the regenerative electricity from the load 105 may charge the first energy storage unit 140; as the switch S3 is conducted, the regenerative electricity from the load 105 may charge the second energy storage unit 150.

The battery management circuit 130 may control the switches S1 - S3 and adjust the charging and discharging operations of the first energy storage unit 140 and the second energy storage unit 150 according to the power consumption status of the load 105 or the power supplying status. Several states will be described as following: in state (1), when the switches S1 ~ S3 are not conducted (turned off), the first energy storage unit 140 and the second energy storage unit 150 do not perform the charging and discharging operations. In state (2), when only the switch S1 is conducted (turned on), the one with higher power among the first energy storage unit 140 and the second energy storage unit 150 charges to the one with lower power. In state (3), when only the switch S3 is conducted, the second energy storage unit 150 may discharge to the load 105 or the load 105 charges the second energy storage unit 150.

In state (4), as the switches S1, S3 are conducted only, the second energy storage unit 150 may discharge to the load 105 or the load 105 may charge to the second energy storage unit 150, meanwhile, the one with higher power among the first energy storage unit 140 and the second energy storage unit 150 charge to the anther one with lower power. In state (5), as the switch 2 is conducted only, the first energy storage unit 140 may discharge to the load 195 or the load 105 may charge to the first energy storage unit 140. In state (6), as the switches S1, S2 are conducted only, the first energy storage unit 140 may discharge to the load 105 or the load 105 may charge the first energy storage unit 140, meanwhile, the one with higher power among the first energy storage unit 140 and the second energy storage unit 150 may charge to the one with lower power. It is worth to mention that in the embodiment, the battery management circuit 130 will not conduct the switches S2 and S3 at any gived time.

Additionally, in the process of supplying power, if the switch S 1 is conducted, the energy storage unit with higher energy may support the energy storage unit with lower energy to supply power to the load 105, thereby achieving the effect of pushing the load 105. For example, as the switches S1, S2 are conducted and the power value of the first energy storage unit 140 is lower, the second energy storage unit 150 may not only charge to the first energy storage unit 140 but also supply power to the load 105 through the switch S2 so as to support the first energy storage unit 140 to drive the load 105.

On the other hand, if the power value of the first energy storage unit 140 is higher, the first energy storage unit 140 may supply power to the load 105 and charge the second energy storage unit 150 at the same time. According to another aspect of view, as the switches S1 and S3 are conducted, the energy storage unit with higher power among the first energy storage unit 140 and the second energy storage unit 150 may charge the energy storage unit with lower power value. If the second energy storage unit 150 has lower power value, the first energy storage unit 140 charges the second energy storage unit 150 and supports the second energy storage unit 150 to drive the load 105. Moreover, the hybrid battery module according to the embodiment of the present invention has recharging function. As the switch S2 is conducted, the regenerative electricity from the load 105 may charge the first energy storage unit 140; as the switch S3 is conducted, the regenerative electricity from the load 105 may charge the second energy storage unit 150.

In addition, in the embodiment, the primary function of the battery management circuit 130 is used to monitor the power status of the first energy storage unit 140 and the second energy storage unit 150 and control the switches S1 ~ S3, but the configuration is not limited in FIG. 1. For example, the first battery management unit 131 and the second battery management unit 132 may be integrated into a single battery management unit. The functions of the first battery management unit 131 and the second battery management unit 132 may be implemented by the control unit 134. The configuration of the battery management circuit 130 and the implementation method thereof are illustrated, but are not limited thereto. It is worth to mention that the charging unit 120 has primary function to selectively provide the charging path to the first energy storage unit 140 or the second energy storage unit 150 according to the setup, but the implementation method is not limited thereto in FIG. 1. The switch S1 of the charging unit 120 may be replaced by other components, e.g., multiplexers or MOS transistors, etc. The charging unit 120 may be implemented by a single component, e.g., a DC-DC power converter. Therefore, the circuit configuration of the charging unit 120 is not limited to be configured by the current limit unit 122 and the switch S1. Moreover, in another embodiment of the present invention, the current limit unit 122 and the switch S 1 may also be integrated into the same circuit.

(Second Embodiment)

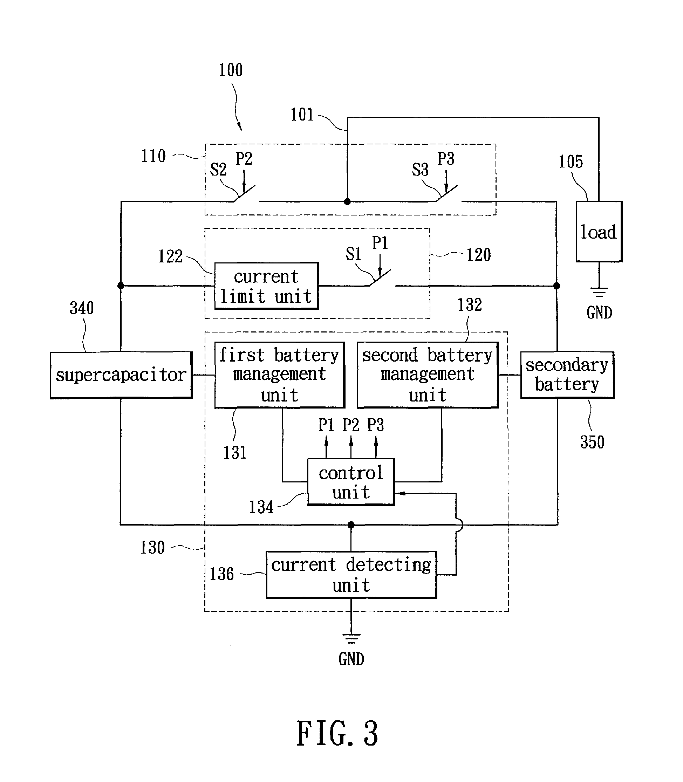

Please refer to FIG. 3, in which a schematic diagram of another embodiment of the hybrid battery module of the present invention is illustrated. The major difference between FIG. 1 and FIG. 3 is a supercapacitor 340 and a secondary battery 350. The first energy storage unit 140 and the second energy storage unit 150 as shown in FIG. 1 may be implemented by the supercapacitor or other energy storage component as shown in FIG. 3. The supercapacitor 340 and the secondary battery 350 are used to implement the first energy storage unit 140 and the second energy storage unit 150 as shown in FIG. 1, respectively. The supercapacitor 340 has the effect for storing energy and discharging energy rapidly. Therefore, as long as the capacitance value of the supercapacitor 240 is large enough, a large power output is generated to drive the load 105. The supercapacitor 240 is also known as an extra large capacitance capacitor, e.g., an electric double-layer capacitor, but is not limited thereto.

(third embodiment)

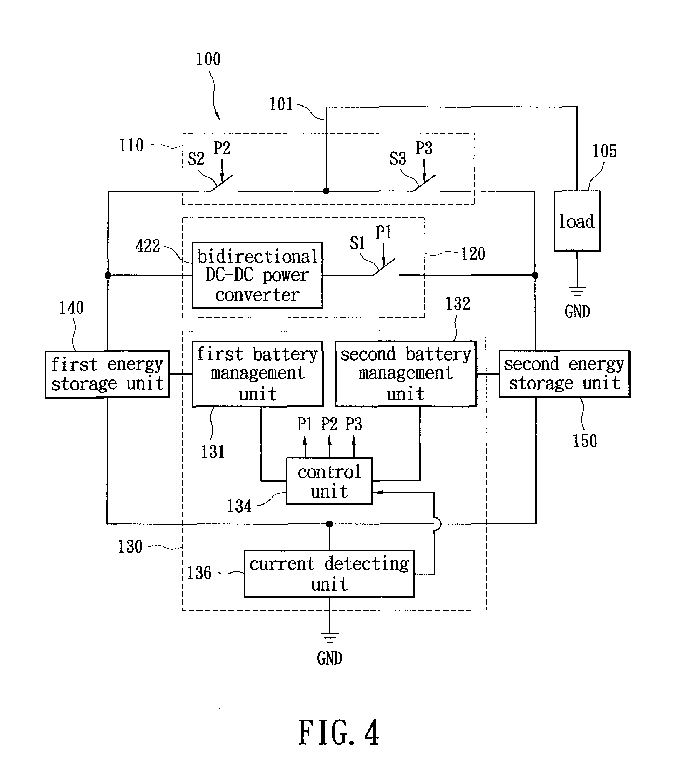

The current limit unit 122 shown in FIG. 1 may be replaced by a bidirectional DC-DC power converter as shown in FIG. 4. FIG. 4 illustrates a schematic diagram of the embodiment in accordance with the hybrid battery module which applies a bidirectional DC-DC power converter 422 to replace the current limit unit 122 according to the present invention. The major difference between FIG. 1 and FIG. 4 is the bidirectional DC-DC power converter 422 which is coupled between the first energy storage unit 140 and the switch S1, for performing power conversion. The bidirectional DC-DC power converter 422 may achieve the effect of power transmission by adjusting the output power according to the states of charge of the first energy storage unit 140 and the second energy storage unit 150, the battery types, and the internal resistances. For example, as the power type secondary battery charges the energy type secondary battery, the bidirectional DC-DC power converter utilizes pulse width modulation technique to control and modulate electric power transmission value transmitted from the power type secondary battery to the energy type secondary battery. On the other hand, the bidirectional DC-DC power converter controls and modulates electric power transmission value transmitted from the energy type secondary battery to the power type secondary battery.

Moreover, Since the bidirectional DC-DC power converter 422 has switching function as well, in another embodiment of the present invention, the charging unit 120 may be implemented by the bidirectional DC-DC power converter 422, wherein the bidirectional DC-DC power converter 422 may be directly coupled between the first energy storage unit 140 and the second energy storage unit 150 for providing the charging path. Since the current conduction of the bidirectional DC-DC power converter 422 has a direction, e.g., the current passing from the first energy storage unit 140 to the second energy storage unit 150 or passing from the second energy storage unit 150 to the first energy storage unit 140, the bidirectional DC-DC power converter 422 may be used to implement the charging unit 120 directly to provide the charging path and achieve the effect of current limiting. The bidirectional DC-DC power converter may function by shutting down the current transmission so as to stop the energy transmission between the first energy storage unit 140 and the second energy storage unit 150.

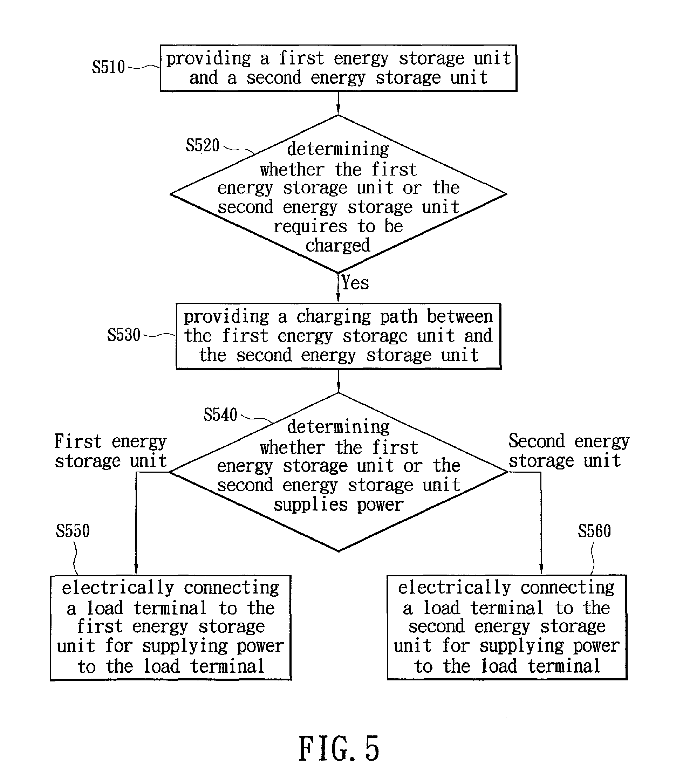

From the aforementioned embodiments, it may also conclude a battery management method. Please refer to FIG. 5, in which a flowchart of the battery management method according to the present invention is illustrated. The battery management method, which is suitable for supplying power to a load terminal comprises the following steps: providing a first energy storage unit and a second energy storage unit in step S510; determining whether the first energy storage unit and the second energy storage unit require to be charged in step S520, if the power of the first energy storage unit or the second energy storage unit is too low, a charging path may be provided between the first energy storage unit and the second energy storage unit, so that the first energy storage unit charges the second energy storage unit or the second energy storage unit charges the first energy storage unit in step S530. By utilizing the aforementioned steps of S520 and S530, it may selectively provide the charging path between the first energy storage unit and the second energy storage unit, so that the energy of the two energy storage units may transfer to each other. Base on the power requirement of the load, in step S540, it determines whether the first energy storage unit or the second energy storage unit supplies power. If the first energy storage unit is chosen, the load terminal is electrically connected to the first energy storage unit so as to supply power to the load terminal in step S550; if the second energy storage unit is chosen, the load terminal is electrically connected to the second energy storage unit so as to supply power to the load terminal in step S560. Herein, in step S530, it further restricts the current flowing through the charging path according to the states of charge of the first energy storage unit and the second energy storage unit.

The aforementioned battery management method is applied on the hybrid battery module which has two different kinds of secondary batteries (the hybrid battery module as shown in FIG. 1 - FIG. 4) to control its charging and discharging processes. The method provides a charging path between the two energy storage units to allow the energy transferring therebetween while the two energy storage units can also selectively individually connect to the load terminal based on different power requirements. Please refer to the aforementioned descriptions in FIG. 1 ~ FIG. 4 for other details.

It is worth to mention that the aforementioned embodiment of the hybrid battery module may be applied on electric vehicles. Herein, the load may be a motor driving system or power system of the electric vehicle, but is not limited thereto. Additionally, the connection relationship for the aforementioned components may be direct, indirect or both direct and indirect electrical connections,, but is not limited thereto, as long as the function of transmitting electrical signals required may be achieved. The technical proposal of the aforementioned embodiment may be combined together or be applied individually. The components may be added, removed, adjusted, or replaced based on the functionalities and design requirements, but are not limited thereto.

As per the aforementioned descriptions, the present invention provide a charging path between two different types of energy storage units and utilize the current limit unit to restrict the current flowing through the charging path, so as to achieve the energy transmission between the two energy storage units and to make it suitable for different load requirement. Furthermore, it overcomes a technical problem that the two different types of secondary batteries may not connect electrically directly and may not transmit power to each other due to difference of the internal resistances of the two different of secondary batteries.

The descriptions illustrated *supra* set forth simply the preferred embodiments of the present invention; however, the characteristics of the present invention are by no means restricted thereto. All changes, alternations, or modifications conveniently considered by those skilled in the art are deemed to be encompassed within the scope of the present invention delineated by the following claims.

## Claims

1. A hybrid battery module for supplying energy to a load terminal, comprising:
a first energy storage unit;
a second energy storage unit;
a charging unit coupled between the first energy storage unit and the second energy storage unit for selectively providing a charging path between the first energy storage unit and the second energy storage unit, so that the first energy storage unit charges the second energy storage unit or the second energy storage unit charges the first energy storage unit; and
a power supply switching unit coupled between the first energy storage unit, the second energy storage unit, and the load terminal for selectively electrically connecting the load terminal to the first energy storage unit or the second energy storage unit so as to supply power to the load terminal.

2. The hybrid battery module according to claim 1, wherein a power density of the first energy storage unit is greater than that of the second energy storage unit and an energy density of the second energy storage unit is greater than that of the first energy storage unit.

3. The hybrid battery module according to claim 1, wherein the first energy storage unit is a power type secondary battery and the second energy storage unit is an energy type secondary battery.

4. The hybrid battery module according to claim 1, wherein the first energy storage unit is a supercapacitor and the second energy storage unit is a secondary battery.

5. The hybrid battery module according to claim 1, wherein charging unit restricts a current flowing through the charging path based on power statuses of the first energy storage unit and the second energy storage unit.

6. The hybrid battery module according to claim 5, wherein the charging unit comprises:
a current limit unit coupled to the first energy storage unit for limiting the current flowing through the charging path; and
a first switch coupled between the current limit unit and the second energy storage unit.

7. The hybrid battery module according to claim 6, wherein the current limit unit comprises:
a impedance component coupled between the first energy storage unit and the first switch.

8. The hybrid battery module according to claim 1, wherein the charging unit comprises:
a bidirectional DC-DC power converter coupled to the first energy storage unit; and
a first switch coupled between the bidirectional DC-DC power converter and the second energy storage unit.

9. The hybrid battery module according to claim 1, wherein the power supply switching unit comprises:
a second switch coupled between the first energy storage unit and the load terminal; and
a third switch coupled between the load terminal and the second energy storage unit.

10. The hybrid battery module according to claim 1, wherein the power supply switching unit comprises:
a bidirectional DC-DC power converter coupled between the first energy storage unit and the second energy storage unit for selectively providing the charging path between the first energy storage unit and the second energy storage unit.

11. The hybrid battery module according to claim 1, wherein the charging unit comprises:
a current limit unit coupled to the first energy storage unit for restricting a current flowing through the charging path; and
a first switch coupled between the current limit unit and the second energy storage unit;
wherein the power supply switching unit comprises:
a second switch coupled between the first energy storage unit and the load terminal; and
a third switch coupled between the load terminal and the second energy storage unit.

12. The hybrid battery module according to claim 1 further comprising:
a battery management circuit coupled to the first energy storage unit, the second energy storage unit, the charging unit, and the power supply switching unit for controlling the charging unit and the power supply switching unit according to power statuses of the first energy storage unit and the second energy storage unit.

13. The hybrid battery module according to claim 12, wherein the battery management unit comprises:
a first battery management unit coupled to the first energy storage unit for monitoring the power status of the first energy storage unit;
a second battery management unit coupled to the second energy storage unit for monitoring the power status of the second energy storage unit;
a current detecting unit coupled to the first energy storage unit and the second energy storage unit for detecting current values of the first energy storage unit and the second energy storage unit; and
a control unit coupled to the first battery management unit, the second battery management unit, the current detecting unit, the charging unit, and the power supply switching unit for controlling the charging unit and the power supply switching unit.

14. A battery management method suitable for managing a hybrid battery module to supply power to a load terminal, comprising:
providing a first energy storage unit and a second energy storage unit;
selectively providing a charging path between the first energy storage unit and the second energy storage unit, so that the first energy storage unit charges the second energy storage unit or the second energy storage unit charges the first energy storage unit; and
selectively electrically connecting the load terminal to the first energy storage unit or the second energy storage unit so as to supply power to the load terminal.

15. The battery management method according to claim 14 further comprising:
restricting a current flowing through the charging path based on power status of the first energy storage unit and the second energy storage unit.

16. The battery management method according to claim 14 further comprising:
controlling the charging unit and the power supply switching unit based on power status of the first energy storage unit and the second energy storage unit.

17. The battery management method according to claim 14, wherein a power density of the first energy storage unit is greater than that of the second energy storage unit and an energy density of the second energy storage unit is greater than that of the first energy storage unit.

18. The battery management method according to claim 14, wherein the first energy storage unit is a power type secondary battery and the second energy storage unit is an energy type secondary battery.

19. The battery management method according to claim 14, wherein the first energy storage unit is a supercapacitor and the second energy storage unit is a secondary battery.
